# EUROPEAN PATENT APPLICATION

(11) **EP 4 201 561 A1**
(43) Date of publication of application: **28.06.2023**
(21) Application number: 21216383.6
(22) Date of filing: 21.12.2021
(51) Int. Cl.: B23B 51/06, B23B 51/00

(54) **DRILL BODY OF AN INDEXABLE INSERT DRILL AND INDEXABLE INSERT DRILL COMPRISING SUCH A DRILL BODY**

(71) Applicant: Seco Tools AB, 737 82 Fagersta (SE)
(72) Inventor: Lindgren, Mathias, 737 82 Fagersta (SE)
(74) Representative: Sandvik

(57) **Abstract**

A drill body (2) of an indexable insert drill comprising:
- at least two chip flutes (10a, 10b) separated from each other in the circumferential direction of the drill body by intermediate ribs (12a, 12b), each chip flute and each rib extending in a helically curved path;
- an insert seat located at a transition between each chip flute and a front face of the drill body; and
- coolant ducts (20a, 20b) arranged in and extending along a respective one of said ribs (12a, 12b), each coolant duct extending in a helically curved path and having an upstream end (21) with an inlet opening (24a, 24b) and a downstream end (22) with an outlet opening (25a, 25b).

Each coolant duct has a cross-sectional area that varies in the axial direction of the coolant duct such that it has a smaller cross-sectional area at its outlet opening than at its inlet opening.

## Description

### FIELD OF THE INVENTION AND PRIOR ART

The present invention relates to a drill body of an indexable insert drill according to the preamble of claim 1. The invention also relates to an indexable insert drill comprising such a drill body.

An indexable insert drill is a drilling tool that is used for drilling of holes in a workpiece and that comprises a drill body and one or more indexable cutting inserts detachably mounted in a respective insert seat in a head portion at a front end of the drill body. Each individual cutting insert may be provided with several identical cutting edges, to thereby allow each cutting insert to be turned into different working positions. When a cutting edge of a cutting insert has been worn out, the cutting insert may be repositioned in its insert seat and mounted in a new working position with another cutting edge in an active cutting position. In order to increase the useful life of the cutting inserts, the interface between the cutting inserts and the workpiece may be cooled and lubricated by a flow of coolant during the drilling operation, wherein the coolant may be supplied to the area of the cutting insert through one or more coolant ducts in the drill body. The flow of coolant to the interface between the cutting inserts and the workpiece will also assist in moving the chips formed during the drilling operation away from the cutting inserts.

US 6 030 155 A discloses an indexable insert drill provided with a drill body with two helically curved chip flutes, which are separated from each other by intermediate ribs formed in the drill body, wherein a coolant duct extends in a helically curved path in each rib.

### OBJECT OF THE INVENTION

The object of the present invention is to provide a drill body for an indexable insert drill of the above-mentioned type that has a new and favourable design.

### SUMMARY OF THE INVENTION

According to the invention, said object is achieved by means of a drill body having the features defined in claim 1.

The drill body according to the invention is elongated and has a rear end and an opposite front end, wherein a central longitudinal axis of the drill body extends between the rear end and the front end of the drill body and wherein the drill body comprises:
- a shank portion located at the rear end of the drill body and configured for attachment to a machine tool;
- a head portion located at the front end of the drill body;
- at least a first chip flute and a second chip flute extending alongside of each other along a part of the drill body from the head portion towards the shank portion, the chip flutes being separated from each other in the circumferential direction of the drill body by intermediate ribs formed in the drill body and extending alongside of the chip flutes, wherein each chip flute and each rib extend in a helically curved path along the associated part of the drill body;
- a first insert seat configured to receive a first cutting insert and located at a transition between the first chip flute and a front face of the drill body;
- a second insert seat configured to receive a second cutting insert and located at a transition between the second chip flute and the front face of the drill body; and
- coolant ducts arranged in and extending along a respective one of said ribs, wherein each coolant duct extends in a helically curved path along at least a part of the associated rib, and wherein each coolant duct has an upstream end with an inlet opening facing the rear end of the drill body and a downstream end with an outlet opening in the head portion.

Each coolant duct has a cross-sectional area that varies in the axial direction of the coolant duct such that it has a smaller cross-sectional area at its outlet opening than at its inlet opening. By having a smaller cross-sectional area at the outlet of each coolant duct than at the inlet, the pressure of the coolant can be better maintained along the coolant ducts, which in its turn results in improved flow properties of the coolant at the outlet of the coolant ducts and thereby an improved cooling effect.

The cross-sectional area of a coolant duct here refers to the cross-sectional area of the coolant duct as seen in a cross section perpendicular to the centre axis of the coolant duct.

According to an embodiment of the invention, each coolant duct has a continuously decreasing cross-sectional area, at least along a part of its extension, as seen in a direction from its upstream end to its downstream end. A continuously decreasing cross-sectional area of a coolant duct implies a smooth change in cross-sectional area of the coolant duct, which is favourable with respect to the flow properties of the coolant along the coolant duct due to the avoidance of abrupt changes in cross-sectional area that could induce the formation of turbulence in the coolant duct. It is particularly preferred that each coolant duct has a continuously decreasing cross-sectional area as seen from its upstream end to its downstream end.

According to an embodiment of the invention, the coolant ducts are located closer to each other at their upstream ends than at their downstream ends. In can be favourable to have the inlet openings of the coolant ducts located close to the longitudinal axis of the drill body, and thereby also close to each other, to thereby allow all coolant ducts to open into one and the same coolant supply duct that is centrally arranged in a rear part of the drill body. In such a case, the coolant is first introduced into the central coolant supply duct and then distributed from the central coolant supply duct to each individual coolant duct. Preferably, at the head portion of the drill body, the positions of the outlet openings of the coolant ducts are adapted to the positions of the insert seats in such a manner that the outlet opening of each coolant duct is positioned at essentially the same radial distance from the longitudinal axis of the drill body as the associated insert seat. Thereby, the coolant discharged from the outlet opening of the coolant duct hits the interface between the workpiece and the cutting insert mounted in the insert seat in question when the drill body is rotated. The outlet openings of the coolant ducts are hereby positioned on opposite sides of and at certain distances from the longitudinal axis of the drill body, so that there preferably is a considerable distance between the coolant ducts at their downstream ends. The longer distance between the coolant ducts at their downstream ends than at their upstream ends may for instance be achieved by having the coolant ducts extending in a respective helically curved path along the periphery of one and the same imaginary cone that widens as seen in a direction from the upstream ends of the coolant ducts towards the downstream ends thereof. In this case, the distance between the coolant ducts increases continuously in the axial direction of the coolant ducts as seen from the upstream ends to the downstream ends of the coolant ducts.

The outlet opening of the coolant ducts are advantageously arranged in the front face of the drill body.

An indexable insert drill is often provided with a peripheral cutting insert mounted in a radially outermost first insert seat and a central cutting insert mounted in a radially innermost second insert seat that is located closer to the longitudinal axis of the drill body than said first insert seat. Thereby, the outlet opening of the coolant duct associated with the peripheral cutting insert is located at a longer radial distance from the longitudinal axis of the drill body than the outlet opening of the coolant duct associated with the central cutting insert. However, the inlet openings of the coolant ducts may be located at the same or essentially same radial distance from the longitudinal axis of the drill body.

According to an embodiment of the invention, the coolant ducts are equal in length, and equal in cross-sectional area at their inlet openings and also at their outlet openings, wherein the cross-sectional area of the coolant ducts varies in the same manner along the extension of the different coolant ducts such that the cross-sectional area of a coolant duct at any axial distance from the inlet opening of the coolant duct is the same as the cross-sectional area of the other coolant duct or each one of the other coolant ducts at the same axial distance from the inlet opening of the latter. Hereby, the flow properties of the coolant along the coolant ducts are the same in all coolant ducts.

According to an embodiment of the invention, at least one of the coolant ducts has a cross-sectional shape that varies at least along a part of its extension. By varying the cross-sectional shape of a coolant duct in the axial direction thereof, for instance by changing from a circular cross-sectional shape to an oval cross-sectional shape, the coolant duct may be adapted to a possible obstruction in the drill body such that it will be possible for the coolant duct to pass the obstruction without having to change the helically curved path of the coolant duct.

The material thickness of the drill body between an inner wall of each coolant duct and the peripheral surface of the drill body is preferable at least 0.75 mm all along the coolant duct to thereby ensure a sufficient wearing depth of the drill body.

Further advantageous features of the drill body according to the present invention will appear from the dependent claims and the description following below.

The invention also relates to an indexable insert drill comprising a drill body of the above-mentioned type and cutting inserts mounted in the insert seats of the drill body.

Further advantageous features of the indexable insert drill according to the present invention will appear from the description following below.

### BRIEF DESCRIPTION OF THE DRAWINGS

With reference to the appended drawings, a specific description of embodiments of the invention cited as examples follows below. In the drawings:
- Figs 1 and 2: are perspective views from different directions of an indexable insert drill according to an embodiment of the present invention,
- Fig 3: is a perspective view of a front part of the indexable insert drill of Figs 1 and 2, as seen with a central cutting insert removed from a radially innermost insert seat in the drill body of the indexable insert drill,
- Fig 4: is a perspective view from another direction of the front part of the indexable insert drill of Figs 1 and 2, as seen with a peripheral cutting insert removed from a radially outermost insert seat in the drill body,
- Fig 5: is a lateral view of the indexable insert drill of Figs 1 and 2,
- Fig 6A: is a cut according to the line A-A in Fig 5,
- Fig 6B: is a cut according to the line B-B in Fig 5,
- Fig 6C: is a cut according to the line C-C in Fig 5,
- Fig 6D: is a cut according to the line D-D in Fig 5,
- Fig 6E: is a cut according to the line E-E in Fig 5,
- Fig 6F: is a cut according to the line F-F in Fig 5,
- Fig 6G: is a cut according to the line G-G in Fig 5,
- Fig 7: is a rear end view of the indexable insert drill according to the direction VII-VII in Fig 5,
- Fig 8: is a front end view of the indexable insert drill according to the direction VIII-VIII in Fig 5, and
- Fig 9: is a schematic illustration of coolant ducts and a central coolant supply duct included in the drill body of the indexable insert drill of Figs 1 and 2.

### DETAILED DESCRIPTION OF EMBODIMENTS OF THE INVENTION

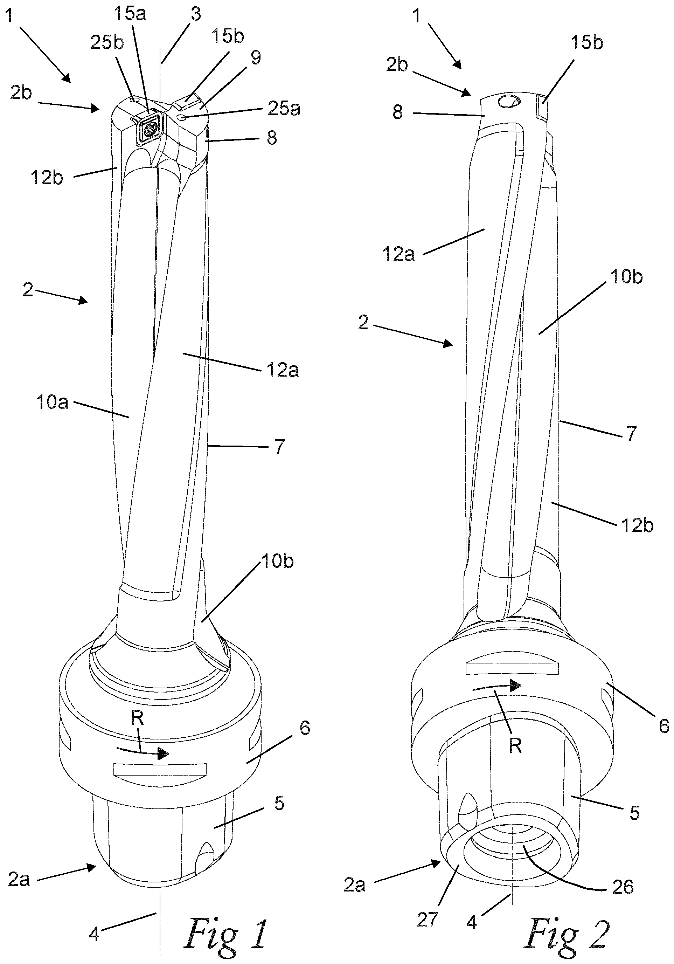

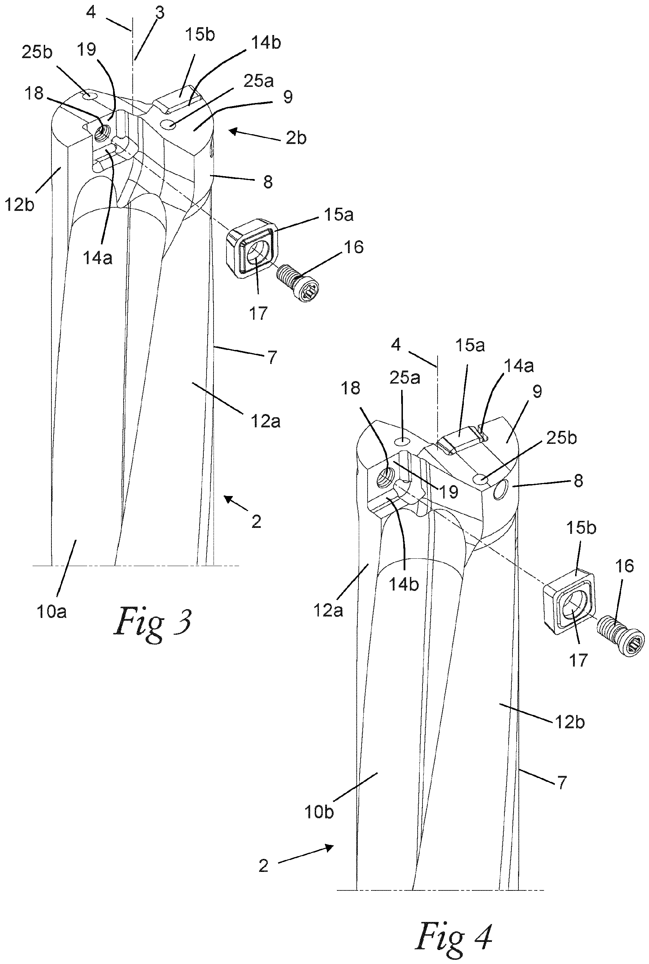

An indexable insert drill 1 according to an embodiment of the present invention is illustrated in Figs 1-8. The indexable insert drill 1 comprises an elongated drill body 2 and is configured to be rotated about an axis of rotation 3. The tool body 2 has a rear end 2a and an opposite front end 2b. A central longitudinal axis 4 of the drill body 2 extends centrally through the drill body between the rear end 2a and the front end 2b thereof, wherein this longitudinal axis 4 coincides with the axis of rotation 3 of the indexable insert drill 1.

A shank portion 5 at the rear end 2a of the drill body 2 forms a connection member, through which the drill body 2 is mountable, directly or via an intermediate tool holder, to a rotating spindle or the similar of a drilling machine or other type of machine tool. In the illustrated embodiment, the shank portion 5 is conically shaped and has a non-circular cross-sectional shape adapted for insertion into a similarly shaped recess in a tool holder or spindle. The conical shape ensures a connection free from play in the radial as well as the axial direction between the shank portion and the tool holder/spindle, whereas the non-circular cross-sectional shape ensures a non-rotatable fixation of the shank portion 5 to the tool holder/spindle. However, the shank portion 5 of the drill body 2 could also have any other suitable shape.

A collar 6 is provided in the drill body 2 in front of the shank portion 5, wherein the shank portion 5 projects from the collar 6 in the axial direction of the drill body 2 on a first side of the collar 6. The drill body 2 further comprises an elongated helix portion 7, which is arranged on an opposite second side of the collar 6 and extends in the axial direction of the drill body 2.

The drill body 2 comprises a head portion 8, which is located at the front end 2b of the drill body in front of the helix portion 7. A first chip flute 10a and a second chip flute 10b are formed in the drill body 2 and extend alongside of each other along the periphery of the helix portion 7. The chip flutes 10a, 10b extend from the head portion 8 towards the collar 6. The chip flutes 10a, 10b are separated from each other in the circumferential direction of the drill body 2 by intermediate ribs 12a, 12b, which are formed in the drill body 2 and extend along the helix portion 7 alongside of the chip flutes 10a, 10b. Each chip flute 10a, 10b and each rib 12a, 12b extend in a helically curved path along the helix portion 7 of the drill body.

In the illustrated embodiment, the helix portion 7 has a rear end located close to the collar 6, wherein the helix portion 7 projects from the collar 6 in the axial direction of the drill body 2. In this case, the chip flutes 10a, 10b and the ribs 12a, 12b end at the rear end of the helix portion 7 close to the collar 6. However, the drill body 2 may as an alternative comprise an additional elongated portion between the collar 6 and the helix portion 7 where the chip flutes 10a, 10b and the ribs 12a, 12b extend in parallel with, or at least essentially in parallel with, the longitudinal axis 4 of the drill body 2 and consequently also in parallel with, or at least essentially in parallel with, each other. In the latter case, each chip flute 10, 10b has a first part that extends in a helically curved path along the helix portion 7 of the drill body and an adjoining second part that extends in a straight path, or at least essentially straight path, along said additional elongated portion of the drill body 2 between the helix portion 7 and the collar 6, wherein each rib 12a, 12b, in the corresponding manner, has a first part that extends in a helically curved path along the helix portion 7 of the drill body and an adjoining second part that extends in a straight path, or at least essentially straight path, along the additional elongated portion of the drill body 2 between the helix portion 7 and the collar 6.

A first insert seat 14a configured to receive a first cutting insert 15a is arranged in the head portion 8 at a transition between the first chip flute 10a and a front face 9 of the drill body 2, and a second insert seat 14b configured to receive a second cutting insert 15b is arranged in the head portion 8 at a transition between the second chip flute 10b and the front face 9 of the drill body 2. In the illustrated embodiment, the first insert seat 14a constitutes a central insert seat and the second insert seat 14b constitutes a peripheral insert seat, wherein the second insert seat 14b is located at a longer radial distance from the longitudinal axis 4 of the drill body 2 than the first insert seat 14a. Each insert seat 14a, 14b is open towards the front face 9 of the drill body 2 in order to allow a cutting insert 15a, 15b mounted in the insert seat to project in the axial direction of the drill body 2 beyond the front face 9 thereof. The second insert seat 14b is also open towards the periphery of the drill body 2 in order to allow a cutting insert 15b mounted in the second insert seat to project in the radial direction of the drill body 2 beyond the periphery thereof. Each chip flute 10a, 10b is arranged in the drill body 2 in front of the associated insert seat 14a, 14b as seen in the intended direction of rotation R of the drill body 2. In an indexable insert drill of larger size, the head portion 8 could be provided with two or more insert seats 14a with associated cutting inserts 15a arranged adjacent to each other at the transition between the first chip flute 10a and the front face 9 of the drill body 2 and two or more insert seats 14b with associated cutting inserts 15b arranged adjacent to each other at the transition between the second chip flute 10a and the front face 9 of the drill body 2. In an indexable insert drill of larger size, there could also be more than two chip flutes 10a, 10b in the drill body 2, such as for instance three of four chip flutes, with a corresponding number of intermediate ribs, each chip flute being associated with one or more insert seats formed at the transition between the chip flute and the front face of the drill body.

In the illustrated embodiment, the first and second cutting inserts 15a, 15b are geometrically identical to each other. In the illustrated embodiments, each cutting insert 15a, 15b is releasably fixed to the associated insert seat 14a, 14b by means of a fastening element 16 in the form of a screw, which extends through a through hole 17 in the cutting insert 15a, 15b and is engaged in a threaded hole 18 in a tangential support surface 19 in the insert seat 14a, 14b.

Coolant ducts 20a, 20b are arranged in and extend along a respective one of the above-mentioned ribs 12a, 12b. Thus, in the illustrated embodiment, a first coolant duct 20a is arranged in a first one 12a of the ribs and a second coolant duct 20b is arranged in the other rib 12b. Each coolant duct 20a, 20b has an upstream end 21 with an inlet opening 24a, 24b facing the rear end 2a of the drill body 2 and a downstream end 22 with an outlet opening 25a, 25b in the head portion 8. The coolant ducts 20a, 20b are located closer to each other at their upstream ends 21 than at their downstream ends 22.

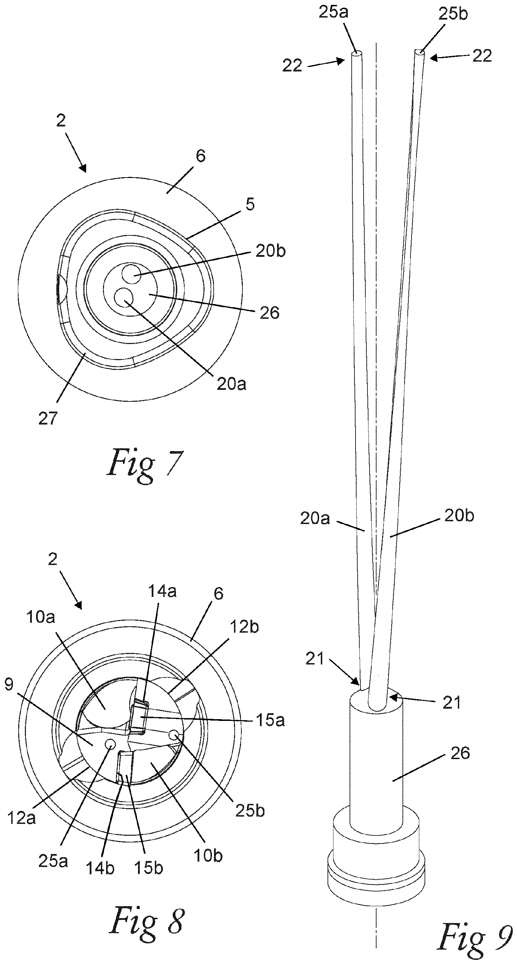

In the illustrated embodiment, a central coolant supply duct 26 is provided in the drill body 2 in a rear part thereof, wherein each coolant duct 20a, 20b opens into the coolant supply duct 26. Thus, in this case, the inlet opening 24a, 24b of each coolant duct 20a, 20b is provided at an interface between the coolant duct and the coolant supply duct 26. However, each coolant duct 20a, 20b could as an alternative extend all along the drill body 2, i.e. also through the collar 6 and the shank portion 5 and have its inlet opening in a rear face of the drill body 2. The inlet openings 24a, 24b of the coolant ducts 20a, 20b may be located at the same or essentially same radial distance from the longitudinal axis 4 of the drill body 2. In the illustrated embodiment, the inlet opening 24b of the second coolant duct 20b is located at a somewhat longer radial distance from the longitudinal axis 4 of the drill body 2 than the inlet opening 24a of the first coolant duct 20a, as illustrated in Fig 7.

The coolant supply duct 26 opens into the rear face 27 of the drill body 2 and extends through the shank portion 5 and the collar 6.

In order to clearly visualize the coolant ducts 20a, 20b and the coolant supply duct 26, the interface between each coolant duct 20a, 20b and the drill body as well as the interface between the coolant supply duct 26 and the drill body are illustrated in Fig 9.

In the illustrated embodiment, the outlet opening 25a, 25b of each coolant duct 20a, 20b is arranged in the front face 9 of the drill body 2. However, each coolant duct 20a, 20b may as an alternative open into the associated chip flute 10a, 10b at a position close to the front face 9 of the drill body 2. The outlet openings 25a, 25b of the coolant ducts 20a, 20b are located at mutually different radial distances from the longitudinal axis 4 of the drill body 2 in correspondence with the radial positions of the associated insert seats 14a, 14b. Thus, the outlet opening 25a of the first coolant duct 20a associated with the radially innermost first insert seat 14a is located closer to the longitudinal axis 4 of the drill body 2 than the outlet opening 25b of the second coolant duct 20b associated with the radially outermost second insert seat 14b.

Each coolant duct 20a, 20b extends in a helically curved path along at least a part of the associated rib 12a, 12b. In the illustrated embodiment, each coolant duct 20a, 20b extends in a helically curved path all along the associated rib 12a, 12b. However, if there is sufficient space available in the drill body 2 at the rear end of the ribs 12a, 12b, a rear part of each coolant duct 20a, 20b could be arranged to extend along a straight line in parallel with each other and in parallel with the longitudinal axis 4 of the drill body 2. A front part of each coolant duct 20a, 20b closest to the outlet opening 25a, 25b could also be arranged to extend along a straight line in parallel with or at an angle to the longitudinal axis 4 of the drill body 2.

Each coolant duct 20a, 20b has a cross-sectional area, i.e. an area as seen in a cross section perpendicular to the centre axis of the coolant duct, that varies in the axial direction of the coolant duct such that it has a smaller cross-sectional area at its outlet opening 25a, 25b than at its inlet opening 24a, 24b. Each coolant duct 20a, 20b preferably has a continuously decreasing cross-sectional area, at least along a part of its extension, as seen in a direction from its upstream end 21 to its downstream end 22. Preferably, each coolant duct 20a, 20b has a continuously decreasing cross-sectional area as seen from its upstream end 21 to its downstream end 22, i.e. a continuously decreasing cross-sectional area all along the coolant duct as seen from the inlet opening 24a, 24b to the outlet opening 25a, 25b. However, the cross-sectional area of each coolant duct 20a, 20b could remain constant along some parts of the coolant duct and be continuously decreasing along other parts of the coolant duct.

In the illustrated embodiment, the first and second coolant ducts 20a, 20b extend in a respective helically curved path along the periphery of one and the same imaginary cone that widens as seen in a direction from the upstream ends 21 of the coolant ducts towards the downstream ends 22 thereof. However, each coolant duct 20a, 20b may also extend in a helically curved path in any other suitable manner.

The coolant ducts 20a, 20b are preferably equal in length and equal in cross-sectional area at their inlet openings 24a, 24b and also at their outlet openings 25a, 25b. Furthermore, the cross-sectional area of the first and second coolant ducts 20a, 20b preferably varies in the same manner along the extension of the coolant ducts such that the cross-sectional area of the first coolant duct 20a at any axial distance from its inlet opening 24a is the same as the cross-sectional area of the second coolant duct 20b at the same axial distance from the inlet opening 24b of the second coolant duct.

The material thickness of the drill body 2 between an inner wall of any of the coolant ducts 20a, 20b and the peripheral surface of the drill body 2 is at least 0.75 mm all along the coolant duct, which consequently implies that the minimum distance between a coolant duct 20a, 20b and the peripheral surface of the drill body 2 is 0.75 mm.

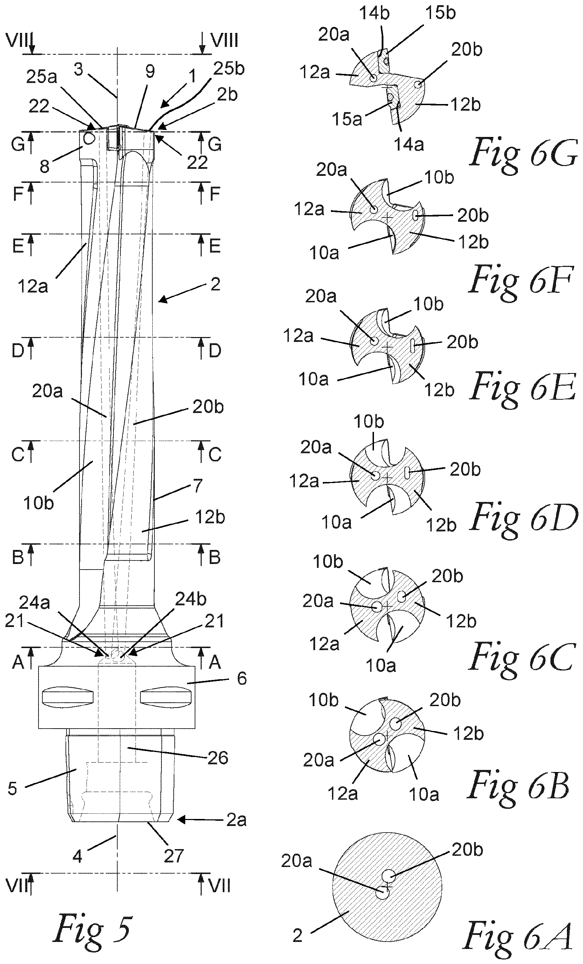

In the illustrated embodiment, the second coolant duct 20b has a cross-sectional shape that varies along a part of its extension, as illustrated in Figs 6A-6G, whereas the cross-sectional shape is essentially circular all along the first coolant duct 20a. In the illustrated example, the second coolant duct 20b has a circular cross-sectional shape at its inlet opening 24b and at its outlet opening 25b and an oval cross-sectional shape at its middle part. Also the first coolant duct 20a could have a cross-sectional shape that varies along a part of its extension.

The drill body 2 is produced in metallic material by 3D printing followed by surface milling of the external surfaces of the drill body and drilling of different holes in the drill body. Thus, a "green body" having a shape corresponding to the external shape of the drill body 2 to be formed is first produced by 3D printing. In the 3D printing, the shank portion 5 and the collar 6 are formed without the central coolant supply duct 26, i.e. as solid parts. However, the coolant ducts 20a, 20b in the ribs 12a, 12b are formed in the 3D printing of the green body. The external surfaces of the green body produced by 3D printing is then machined in order to obtain the desired surface finish, and the threaded holes 18 in the insert seats 14a, 14b and the central coolant supply duct 26 are formed in the green body by drilling, to thereby produce the final drill body 2. The hole for the coolant supply duct 26 is drilled in the green body to make contact with the downstream end 21 of each coolant duct 20a, 20b, such that the inlet openings 24a, 24b of the coolant ducts are formed at the interface between this hole and the coolant ducts.

The invention is of course not in any way restricted to the embodiments described above. On the contrary, many possibilities to modifications thereof will be apparent to a person with ordinary skill in the art without departing from the basic idea of the invention such as defined in the appended claims.

## Claims

1. A drill body of an indexable insert drill, the drill body (2) being elongated and having a rear end (2a) and an opposite front end (2b), wherein a central longitudinal axis (4) of the drill body (2) extends between the rear end (2a) and the front end (2b) of the drill body and wherein the drill body (2) comprises:
- a shank portion (5) located at the rear end (2a) of the drill body (2) and configured for attachment to a machine tool;
- a head portion (8) located at the front end (2b) of the drill body (2);
- at least a first chip flute (10a) and a second chip flute (10b) extending alongside of each other along a part of the drill body (2) from the head portion (8) towards the shank portion (5), the chip flutes (10a, 10b) being separated from each other in the circumferential direction of the drill body (2) by intermediate ribs (12a, 12b) formed in the drill body and extending alongside of the chip flutes (10a, 10b), wherein each chip flute (10, 10b) and each rib (12a, 12b) extend in a helically curved path along the associated part of the drill body;
- a first insert seat (14a) configured to receive a first cutting insert and located at a transition between the first chip flute (10a) and a front face (9) of the drill body (2);
- a second insert seat (14b) configured to receive a second cutting insert and located at a transition between the second chip flute (10b) and the front face (9) of the drill body (2); and
- coolant ducts (20a, 20b) arranged in and extending along a respective one of said ribs (12a, 12b), wherein each coolant duct (20a, 20b) extends in a helically curved path along at least a part of the associated rib (12a, 12b), and wherein each coolant duct (20a, 20b) has an upstream end (21) with an inlet opening (24a, 24b) facing the rear end (2a) of the drill body (2) and a downstream end (22) with an outlet opening (25a, 25b) in the head portion (8),
**characterized in that** each coolant duct (20a, 20b) has a cross-sectional area that varies in the axial direction of the coolant duct such that it has a smaller cross-sectional area at its outlet opening (25a, 25b) than at its inlet opening (24a, 24b).

2. A drill body according to claim 1, **characterized in that** each coolant duct (20a, 20b) has a continuously decreasing cross-sectional area, at least along a part of its extension, as seen in a direction from its upstream end (21) to its downstream end (22).

3. A drill body according to claim 1 or 2, **characterized in that** each coolant duct (20a, 20b) has a continuously decreasing cross-sectional area as seen from its upstream end (21) to its downstream end (22).

4. A drill body according to any of claims 1-3, **characterized in that** the coolant ducts (20a, 20b) are located closer to each other at their upstream ends (21) than at their downstream ends (22).

5. A drill body according to claim 4, **characterized in that** the coolant ducts (20a, 20b) extend in a respective helically curved path along the periphery of one and the same imaginary cone that widens as seen in a direction from the upstream ends (21) of the coolant ducts towards the downstream ends (22) thereof.

6. A drill body according to any of claims 1-5, **characterized in that** the inlet openings (24a, 24b) of the coolant ducts (20a, 20b) are located at the same or essentially same radial distance from the longitudinal axis (4) of the drill body (2).

7. A drill body according to any of claims 1-6, **characterized in that** the outlet opening (25a, 25b) of each coolant duct (20a, 20b) is arranged in the front face (9) of the drill body (2).

8. A drill body according to claim 7, **characterized in that** the first and second insert seats (14a, 14b) are located at mutually different radial distances from the longitudinal axis (4) of the drill body, wherein the outlet openings (25a, 25b) of the coolant ducts (20a, 20b) are located at mutually different radial distances from the longitudinal axis (4) of the drill body (2).

9. A drill body according to any of claims 1-8, **characterized in that** a central coolant supply duct (26) is provided in the drill body (2) in a rear part thereof, wherein each coolant duct (20a, 20b) opens into the central coolant supply duct (26).

10. A drill body according to any of claims 1-9, **characterized in that** the coolant ducts (20a, 20b) are equal in length and equal in cross-sectional area at their inlet openings (24a, 24b) and also at their outlet openings (25a, 25b), wherein the cross-sectional area of the coolant ducts (20a, 20b) varies in the same manner along the extension of the different coolant ducts such that the cross-sectional area of a coolant duct at any axial distance from the inlet opening (24a, 24b) of the coolant duct is the same as the cross-sectional area of the other coolant duct or each one of the other coolant ducts at the same axial distance from the inlet opening (24a, 24b) of the latter.

11. A drill body according to any of claims 1-10, **characterized in that** at least one of the coolant ducts (20a, 20b) has a cross-sectional shape that varies at least along a part of its extension.

12. A drill body according to any of claims 1-11, **characterized in that** the material thickness of the drill body (2) between an inner wall of each coolant duct (20a, 20b) and the peripheral surface of the drill body is at least 0.75 mm all along the coolant duct.

13. An indexable insert drill comprising a drill body (2) according to any of claims 1-12 and cutting inserts (15a, 15b) mounted in the insert seats (14a, 14b) of the drill body.
